# EUROPÄISCHE PATENTSCHRIFT

(11) **EP 3 733 972 B1**
(45) Veröffentlichungstag und Bekanntmachung des Hinweises auf die Patenterteilung: **10.11.2021**
(21) Anmeldenummer: 19172520.9
(22) Anmeldetag: 03.05.2019
(51) Int. Cl.: E01F 15/00, G01S 13/00

(54) **FAHRZEUGRÜCKHALTESYSTEM**
VEHICLE RETENTION SYSTEM
SYSTÈME DE RETENUE DE VÉHICULE

(43) Veröffentlichungstag der Anmeldung: 04.11.2020
(73) Patentinhaber: Volkmann & Rossbach GmbH & Co. KG, 56410 Montabaur (DE)
(72) Erfinder: Volkmann, Vanessa Manuela, 56410 Montabaur (DE); Dröge, Jan Eike, 53123 Bonn (DE); Heisig, Tobias, 56170 Bendorf (DE); Schnitzler, Hans-Jürgen, 53567 Buchholz (DE)
(74) Vertreter: Thum, Bernhard

(56) Entgegenhaltungen:
- CN-A- 107 190 671
- DE-A1- 19 721 901
- DE-A1-102007 043 460
- DE-A1-102014 216 276

## Beschreibung

Die vorliegende Erfindung betrifft ein Fahrzeugrückhaltesystem. Fahrzeugrückhaltesysteme dienen zur Absicherung eines Verkehrswegs und erstrecken sich zumindest abschnittsweise entlang dieses Verkehrswegs. Es gibt stationäre und mobile Fahrzeugrückhaltesysteme. Stationäre Fahrzeugrückhaltesysteme sind dauerhaft an dem Verkehrsweg vorgesehen. Mobile Fahrzeugrückhaltesysteme können temporär an einem Verkehrsweg angeordnet werden, um beispielsweise zeitweilige Gefahrenstellen wie Baustellen abzusichern. Mobile Fahrzeugrückhaltesystem können auch entlang einer Fahrspur mit geänderter Spurführung vorgesehen werden. Mobile Fahrzeugrückhaltesysteme und stationäre Fahrzeugrückhaltesysteme oder Fahrzeugrückhaltesysteme unterschiedlichen Typs können über Übergangskonstruktionen verbunden werden, die den Übergang zwischen den Fahrzeugrückhaltesystemen bilden. Fahrzeugrückhaltesysteme beginnen oder enden ferner mit einer sogenannten Anfangs-Endkonstruktionen. Die Anfangs-Endkonstruktionen können dementsprechend den Anfang oder das Ende eines Fahrzeugrückhaltesystems markieren. Derartige Anfangs-Endkonstruktionen können beispielsweise eine Absenkung eine Schutzplankeneinrichtung des Untergrunds und/oder Dämpfer- bzw. Puffereinrichtungen aufweisen.

Fahrzeuge sind heutzutage häufig mit Radarsensoren ausgestattet, um vorausfahrende Fahrzeuge und/oder Hindernisse erkennen zu können. Aus der Offenlegungsschrift DE 10 2014 216 276 A1 sind Radarbaken bekannt, die ein Antwort-Radarsignal abgeben können. Die Offenlegungsschrift DE 197 21 901 A1 offenbart die Anbringung von Radar-Reflektoren in einem Gleisbereich. Ein Radarsystem eines Schienenfahrzeugs erkennt aufgrund der Echosignale der Radar-Reflektoren und aufgrund des Fehlens oder der verringerten Intensität des Echosignals, ob ein Hindernis vorhanden ist.

Es ist eine Aufgabe der vorliegenden Erfindung ein Fahrzeugrückhaltesystem bereitzustellen, das einem mit einem Radarsensor versehenen Fahrzeug Informationen bereitstellen kann.

Diese Aufgabe wird mit einem Fahrzeugrückhaltesystem mit den Merkmalen des Patentanspruchs 1 gelöst.

Weitere Ausführungsformen sind in den abhängigen Ansprüchen angegeben.

Das erfindungsgemäße Fahrzeugrückhaltesystem zur dauerhaften oder temporären Absicherung von Verkehrswegen ist dazu ausgebildet, sich entlang zumindest eines Abschnitts des wenigstens einen Verkehrswegs zu erstrecken. Das wenigstens eine Fahrzeugrückhaltesystem weist wenigstens eine Radarreflektoranordnung mit mehreren Radarreflektoren auf, wobei die Radarreflektoren zur Erzeugung eines vorbestimmten Rückstrahldiagramms in wenigstens einem vorbestimmten Anordnungsmuster an dem Fahrzeugrückhaltesystem angeordnet sind.

An dem Fahrzeugrückhaltesystem können die Radarreflektoren in einem vorbestimmten Anordnungsmuster angeordnet werden, um ein vorbestimmtes Rückstrahldiagramm zu erzeugen. Über das vorbestimmte Rückstrahldiagramm können einem mit einem Radarsensor versehenen Fahrzeug Informationen über das Fahrzeugrückhaltesystem und/oder über den Straßenverlauf bereitgestellt werden.

Mit der Radarreflektoranordnung an dem Fahrzeugrückhaltesystem gemäß der Erfindung kann zunächst sichergestellt werden, dass das Fahrzeug das Fahrzeugrückhaltesystem als Hindernis bzw. als Element zur Verkehrsführung erkennt. Darüber hinaus kann das Fahrzeug aufgrund des wenigstens einen vorbestimmten Anordnungsmusters der Radarreflektoren und dem damit erzeugten vorbestimmten Rückstrahldiagramm beispielsweise erkennen, ob es sich um ein stationäres Fahrzeugrückhaltesystem, um ein mobiles Fahrzeugrückhaltesystem oder eine Übergangskonstruktion handelt. Mit dem Anordnungsmuster der Radarreflektoren bzw. mit dem dadurch erzeugten Rückstrahldiagramm kann dem Fahrzeug beispielsweise angezeigt werden, dass eine geänderte Spurführung mit einem mobilen Fahrzeugrückhaltesystem vorliegt. Ferner kann mit einer Radarreflektoranordnung und dem von ihr erzeugten Rückstrahldiagramm die Fahrtrichtung der jeweiligen Fahrspur vorgegeben und/oder vor einer Falschfahrt (Geisterfahrer) warnen. Dazu können die Radarreflektoren beispielsweise derart angeordnet und/oder ausgebildet sein, dass sie in Abhängigkeit der Fahrtrichtung ein unterschiedliches Rückstrahldiagramm erzeugen. Anhand der sich unterscheidenden Rückstrahldiagramme kann das Fahrzeug bzw. das Fahrassistenz-System über den Radarsensor erkennen, ob eine Falschfahrt vorliegt oder sich das Fahrzeug in der richtigen Fahrtrichtung bewegt.

Allgemein können mit der vorliegenden Erfindung über das Anordnungsmuster der Radarreflektoren und dem damit erzeugten vorbestimmten Rückstrahldiagramm einem mit einem Radarsensor ausgestatteten Fahrzeug Informationen bereitgestellt werden.

Das vorbestimmte Anordnungsmuster kann in wenigstens einem Abschnitt des Fahrzeugrückhaltesystems von Radarreflektoren gebildet werden, die entlang des Fahrzeugrückhaltesystems im Wesentlichen einen gleich großen Abstand zueinander aufweisen.

Das vorbestimmte Anordnungsmuster kann in wenigstens einem Abschnitt des Fahrzeugrückhaltesystems von Radarsensoren gebildet werden, deren Abstände zueinander sich entlang des wenigstens einen Fahrzeugrückhaltesystems verändern. Die Abstände zwischen aufeinanderfolgenden bzw. benachbarten Radarreflektoren können sich entlang des Fahrzeugrückhaltesystems verändern. Die Abstände zwischen zwei aufeinanderfolgenden Radarreflektoren können entlang des Fahrzeugrückhaltesystems größer oder kleiner werden. Über die Abstände zwischen den Radarreflektoren kann unabhängig davon, ob die Abstände konstant sind oder sich verändern, ein vorbestimmtes Rückstrahldiagramm erzeugt werden, mit dem einem Fahrzeug Informationen bereitgestellt werden können.

Das vorbestimmte Anordnungsmuster kann ferner von Radarreflektoren gebildet werden, die in einer vorbestimmten Kodierung angeordnet sind. Zur Bildung der Kodierung können beispielsweise eine erste Gruppe von Radarreflektoren mit einer vorbestimmten Anzahl an Radarreflektoren, die einen ersten Abstand zueinander aufweisen, eine zweite Gruppe von Radarreflektoren mit einer vorbestimmten Anzahl an Radarreflektoren, die einen zweiten Abstand zueinander aufweisen, und eine dritte Gruppe von Radarreflektoren mit einer vorbestimmten Anzahl an Radarreflektoren vorgesehen sein, die einen dritten Abstand zueinander aufweisen. Diese Gruppen können in sich unterscheidender Reihenfolge angeordnet sein, um die Kodierung zu erzeugen. Es ist selbstverständlich denkbar, dass mehr als drei Gruppen vorgesehen sind. Es ist ferner denkbar, über die Abstände zwischen den einzelnen Radarreflektoren oder den Gruppen von Radarreflektoren eine Art Morsekode zu erzeugen. In diesem Fall werden kurze und lange Abstände zwischen den Radarreflektoren oder Gruppen von Radarreflektoren verwendet, um einen vorbestimmtes Rückstrahldiagramm zu erzeugen, mit dem dem Fahrzeug Informationen bereitgestellt werden können.

Die wenigstens eine Radarreflektoranordnung kann Radarreflektoren unterschiedlichen Typs aufweisen. Das vorbestimmte Anordnungsmuster kann somit auch mit Radarreflektoren von sich unterscheidenden Typs gebildet werden. Die Radarreflektoren unterschiedlichen Typs können zur Erzeugung des vorbestimmten Rückstrahldiagramms dienen. Jeder Radarreflektortyp kann ein vorbestimmtes Rückstrahldiagramm erzeugen. Dementsprechend können mehrere Radarreflektortypen verwendet werden, um die Radarreflektoranordnung zu bilden. Beispielsweise können zumindest zwei sich unterscheidende Typen von Radarreflektoren wechselweise angeordnet werden, um ein vorbestimmtes Rückstrahldiagramm zu erzeugen.

Die Radarreflektoranordnung kann wenigstens einen Winkelreflektor und/oder wenigstens einen Röhrenreflektor aufweisen. Zusätzlich oder alternativ kann die Radarreflektoranordnung wenigstens einen Retroreflektor umfassen. Diese Retroreflektoren können ähnlich zu den als "Katzenaugen" bekannten Reflektoren ausgebildet sein. Die Retroreflektoren können beispielsweise ein Prisma oder mehrere Prismen aufweisen, die die entsprechende Reflexion erzeugen. Die Retroreflektoren können an einer Seitenfläche oder an der Oberseite eines Fahrzeugrückhaltesystems angebracht sein. Die Anbringung der Radarreflektoren an der Oberseite des Fahrzeugrückhaltesystems kann gerade bei engen Fahrspuren vorteilhaft sein, da die Radarreflektoren an der Oberseite von einem vorbeifahrenden Fahrzeug nicht abgefahren werden können.

Die Radarreflektoren können aus Metall oder aus einem metallischen überzogenen Kunststoff hergestellt sein. Ferner können die Radarreflektoren aus einem folierten Kunststoff hergestellt sein. Beispielsweise kann zur Folierung eine metallische Folie und/oder eine retroreflektierende Folie verwendet werden.

Die Radarreflektoren können in einer vorbestimmten Lage und/oder Stellung an dem Fahrzeugrückhaltesystem angeordnet sein. Durch die Stellung oder Lage des Reflektors kann ein vorbestimmtes Rückstrahldiagramm erzeugt werden. Dies gilt insbesondere für Winkelreflektoren. Bei einem Winkelreflektor kann jede Lage oder Stellung des Winkelreflektors ein anderes Rückstrahldiagramm erzeugen. Anders ausgedrückt kann je nach Lage und Stellung des Winkelreflektors ein anderes Rückstrahldiagramm erzeugt werden.

Es kann wenigstens eine Halterungsvorrichtung vorgesehen sein, mit der der wenigstens eine Radarreflektor an dem Fahrzeugrückhaltesystem angebracht werden kann. Die Halterung kann eine Stange oder einen Pfosten aufweisen, an der der Radarreflektor angebracht ist. Die Halterungsvorrichtung kann ferner eine Klemmeinrichtung oder eine Klammer aufweisen, mit der der Radarreflektor an dem Fahrzeugrückhaltesystem befestigt werden kann. Die Halterung kann ferner auch den Radarreflektor abschnittsweise aufnehmen. Die Radarreflektoren können an der Oberseite des Fahrzeugrückhaltesystems und/oder an einer Seitenfläche des Fahrzeugrückhaltesystems angeordnet sein. Die Radarreflektoren können an einem Längsholm und/oder einer Schutzplanke und/oder einem Kastenprofil des Fahrzeugrückhaltesystems angebracht sein. Es ist ferner denkbar, die Radarreflektoren an einem Pfosten anzubringen oder mit einem Pfosten zu verbinden.

Wie eingangs bereits erwähnt wurde, gibt es verschiedene Typen von Fahrzeugrückhaltesystemen, die sich grob in stationäre Fahrzeugrückhaltesysteme, mobile Fahrzeugrückhaltesysteme und Übergangskonstruktionen zwischen mehreren Fahrzeugrückhaltesystemen einordnen lassen. Einem stationären Fahrzeugrückhaltesystem kann ein vorbestimmtes (erstes) Anordnungsmuster der Radarreflektoren zugeordnet sein. Einem mobilen Fahrzeugrückhaltesystem kann ein vorbestimmtes (zweites) Anordnungsmuster der Radarreflektoren zugeordnet sein, das sich jedoch von dem Anordnungsmuster für ein stationäres Fahrzeugrückhaltesystem unterscheidet. Übergangskonstruktionen kann ein weiteres (drittes) Anordnungsmuster der Radarreflektoren zugeordnet sein, das sich von den Anordnungsmustern für mobile Fahrzeugrückhaltesysteme und stationäre Fahrzeugrückhaltesysteme unterscheidet. Als eine weitere Kategorie von Fahrzeugrückhaltesystemen existieren sogenannte Anfangs-Endkonstruktionen, die den Anfang oder das Ende eines Fahrzeugrückhaltesystems markieren. Derartigen Anfangs-Endkonstruktionen kann ein weiteres (viertes) Anordnungsmuster der Radarreflektoren zugeordnet sein, das sich von den anderen Anordnungsmustern unterscheidet.

Im Folgenden werden verschiedene Ausführungsbeispiele der vorliegenden Erfindung mit Bezug auf die beigefügten Figuren beschrieben. Es stellen dar:
- Figur 1: eine schematische Ansicht eines schutzwandartigem Fahrzeugrückhaltesystems temporär oder dauerhaft mit daran angeordneten Radarreflektoren;
- Figuren 2 bis 4b: perspektivische Ansichten verschiedener Radarreflektortypen;
- Figur 5: eine Ansicht eines permanenten Fahrzeugrückhaltesystems gemäß einem weiteren Ausführungsbeispiel;
- Figur 6: eine Ansicht eines Fahrzeugrückhaltesystems gemäß einem weiteren Ausführungsbeispiel, das eine Übergangskonstruktion zwischen einem temporären und einem dauerhaften Fahrzeugrückhaltesystem darstellt;

- Figur 7: eine Ansicht eines Fahrzeugrückhaltesystems gemäß einem weiteren Ausführungsbeispiel, das eine Übergangskonstruktion zwischen einem Wandabschnitt eines Schutzwandsystems und einer Schutzplankenkonstruktion darstellt; und
- Figuren 8a und 8b: Ansichten eines temporären Fahrzeugrückhaltesystems gemäß einem weiteren Ausführungsbeispiel;
- Figur 9: eine perspektivische temporären Ansicht eines Fahrzeugrückhaltesystems gemäß einem weiteren Ausführungsbeispiel,
- Figur 10: Ansichten eines Fahrzeugrückhaltesystems gemäß einem weiteren Ausführungsbeispiel, das eine Variante einer AnfangsEndkonstruktion darstellt;
- Figuren 11 und 12: Ansichten eines Fahrzeugrückhaltesystems gemäß einem weiteren Ausführungsbeispiel, das eine weitere Variante einer Anfangs-Endkonstruktion darstellt; und
- Figuren 13 und 14: Ansichten eines Fahrzeugrückhaltesystems gemäß einem weiteren Ausführungsbeispiel, das eine weitere Variante einer Anfangs-Endkonstruktion mit höherem Aufhaltever mögen darstellt.

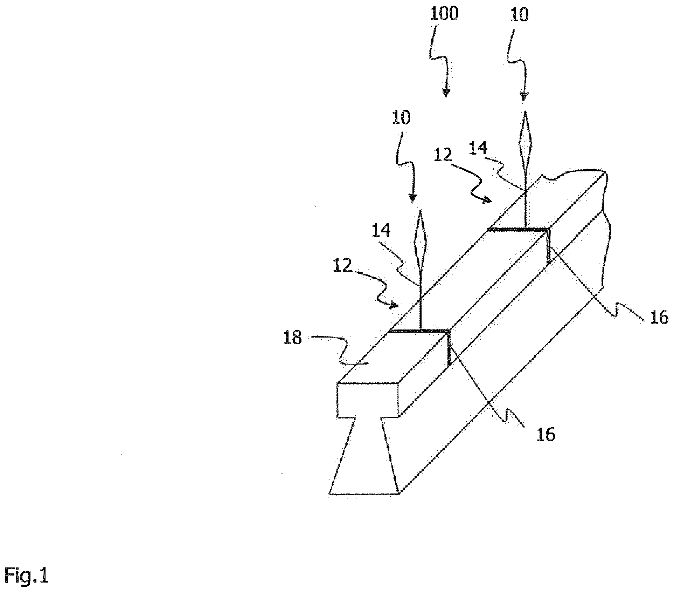

Figur 1 zeigt eine schematische Ansicht eines Fahrzeugrückhaltesystems 100. Die schematische Darstellung gemäß Figur 1 steht stellvertretend für verschiedene Arten oder Typen von Fahrzeugrückhaltesystemen, an denen eine Radarreflektoranordnung RF angeordnet werden kann. An dem Fahrzeugrückhaltesystem 100 sind Radarreflektoren 10 der Radarreflektoranordnung RF angeordnet. Das Fahrzeugrückhaltesystem 100 kann entlang von Verkehrswegen angeordnet sein, um diese abzusichern. Die Radarreflektoren 10 sind über eine Halterungseinrichtung 12 an dem Fahrzeugrückhaltesystem 100 angebracht. Die Halterungseinrichtung 12 weist einen Pfosten 14 und ein Befestigungselement 16 auf, über das die Halterungseinrichtung 12 und damit der Radarreflektor 10 an einem Leitelement oder einem oberen Endbereich 18 des Fahrzeugrückhaltesystems 100 angebracht ist. Es ist denkbar, die Radarreflektoren 10 ohne die Pfosten 14 direkt an der Oberseite des Fahrzeugrückhaltesystems 100 anzubringen. Die Radarreflektoren 10 können beispielsweise Winkelreflektoren sein.

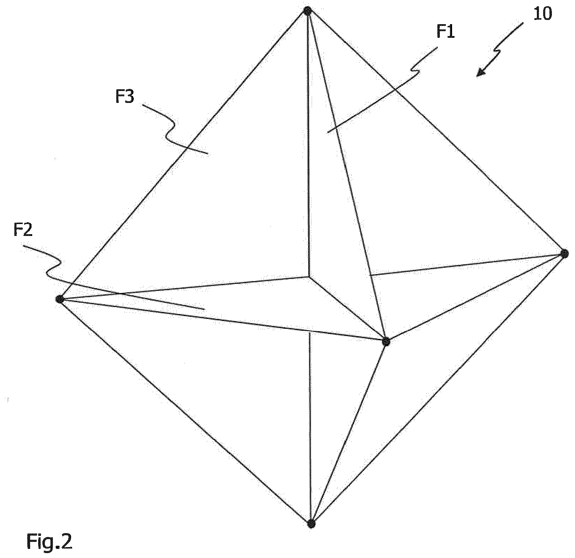

Die Figuren 2 bis 4 zeigen verschiedene beispielhafte Typen von Winkelreflektoren, die an einem Fahrzeugrückhaltesystem 100 angebracht werden können. Die Erfindung ist jedoch nicht auf den Einsatz von Winkelreflektoren beschränkt. Die Radarreflektoren können auch in Form eines Retroreflektors oder eines Röhrenreflektors ausgebildet sein. Die Retroreflektoren können wie die als "Katzenaugen" bekannten Reflektoren ausgebildet sein. Die Retroreflektoren können beispielsweise an den Seitenflächen oder der Oberseite eines Fahrzeugrückhaltesystems angebracht werden können.

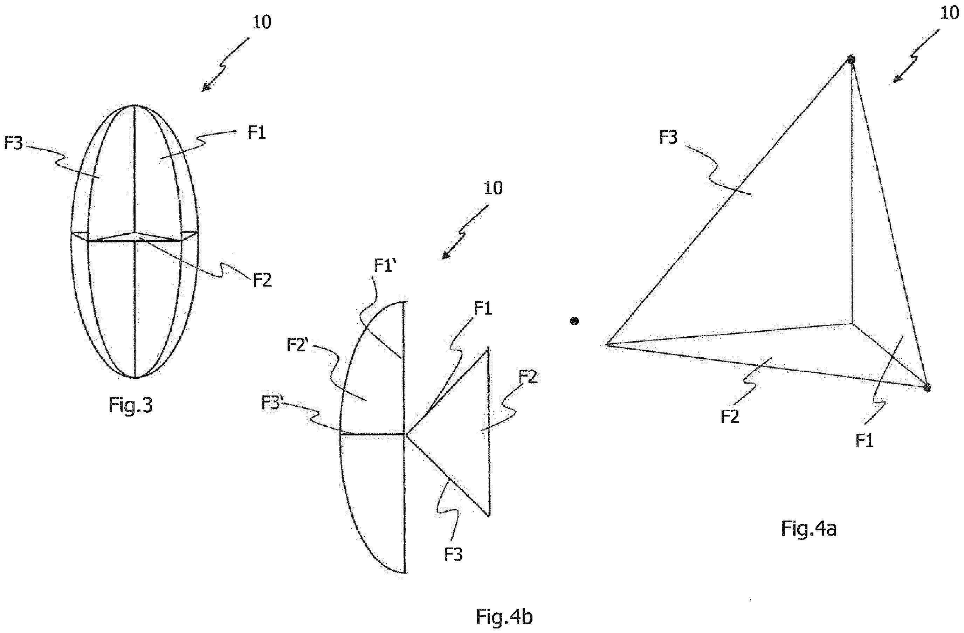

Winkelreflektoren weisen wenigstens zwei Flächen auf, die sich im Wesentlichen mit einem Winkel von 90° zueinander erstrecken, um die Reflexion der Radarwellen zu erzeugen. Figur 2 zeigt einen oktaederförmigen Winkelreflektor 10 mit 24 reflektierenden Flächen von denen beispielhaft die Flächen F1, F2, F3 mit Bezugszeichen versehen sind. Jeweils drei der reflektierenden Flächen F1, F2, F3 bilden für sich genommen einen einzelnen Winkelreflektor, sodass auch davon gesprochen werden kann, dass sich dieser oktaederförmigen Winkelreflektor 10 aus acht Winkelreflektoren mit jeweils drei reflektierenden Flächen F1, F2, F3 zusammensetzt. Durch eine Veränderung der Lage und oder Stellung des Winkelreflektors 10 können unterschiedliche Rückstrahldiagramme erzeugt werden. Dadurch können durch eine vorbestimmte Stellung oder Lage des in Figur 2 gezeigten Winkelreflektors unterschiedliche Rückstrahldiagramme erzeugt werden. Mit diesen unterschiedlichen Rückstrahldiagrammen ist es möglich, einem Fahrzeug oder einem Fahrerassistenzsystemen über einen Radarsensor die korrekte Fahrtrichtung vorzugeben oder zu warnen, wenn eine Falschfahrt vorliegt. Figur 3 zeigt einen Winkelreflektor 10 mit einer im Wesentlichen runden oder ovalen Grundform. Figur 4a zeigt einen triangularen Winkelreflektor mit drei reflektierenden Flächen F1, F2, F3. Ferner können die Radarreflektoren 10 auch so ausgebildet sein, dass aus unterschiedlichen Richtungen unterschiedliche Rückstrahldiagramme erzeugt werden. Auch mit einem derart ausgebildeten Radarreflektor 10 kann einem Fahrzeug oder einem Fahrerassistenzsystemen die korrekte Fahrtrichtung vorgegeben oder vor einer Falschfahrt gewarnt werden. In Figur 4b ist ein derartiger Radarreflektor 10 schematisch dargestellt. Der Radarreflektor 10 gemäß Figur 4b stellt eine Kombination aus einem triangularen Winkelreflektor und einem Winkelreflektor mit einer runden Grundform dar.

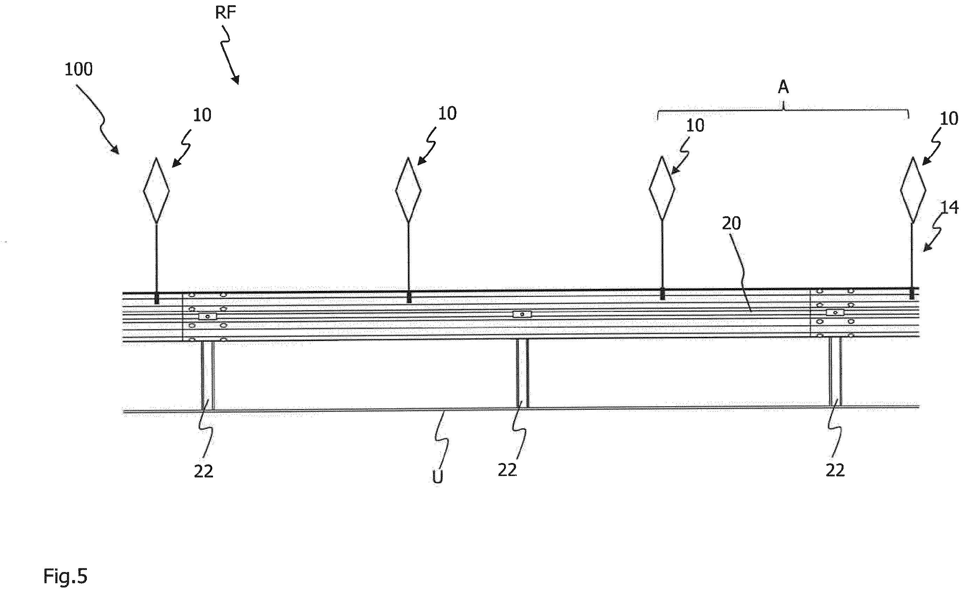

Figur 5 zeigt ein Fahrzeugrückhaltesystem 100 gemäß einem Ausführungsbeispiel. Das Fahrzeugrückhaltesystem 100 weist eine Schutzplanke 20 und im Untergrund U verankerte Pfosten 22 auf. An dem Fahrzeugrückhaltesystem 100 ist ferner eine Radarreflektoranordnung RF angebracht. Die Radarreflektoranordnung RF weist mehrere Radarreflektoren 10 auf. Die Radarreflektoren 10 sind über die Halterungseinrichtung 12 an den Schutzplanken 20 befestigt. Die Radarreflektoren 10 weisen einen vorbestimmten Abstand A zueinander auf. Gemäß diesem Ausführungsbeispiel weisen alle Radarreflektoren 10 den Abstand A zueinander auf, d. h. der Abstand A zwischen den einzelnen Reflektoren 10 ist entlang des Fahrzeugrückhaltesystems 100 konstant.

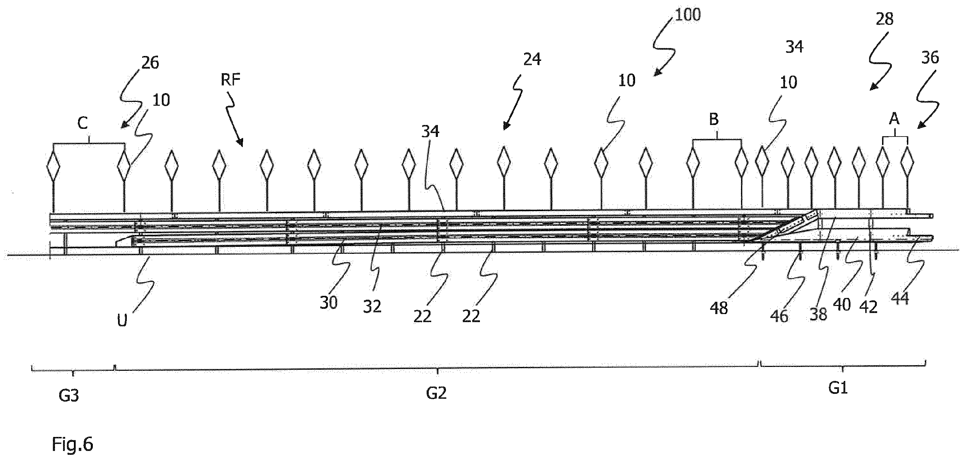

Figur 6 zeigt ein Fahrzeugrückhaltesystem 100 gemäß einem weiteren Ausführungsbeispiel. Das Fahrzeugrückhaltesystem 100 umfasst eine Übergangsschutzplankenkonstruktion 24, eine stationäre Schutzplankeneinrichtung 26 und eine mobile Leitschwelleneinrichtung 28, d.h. einer temporären Schutzeinrichtung. Die Übergangsschutzplankenkonstruktion 24 verbindet die stationäre Schutzplankeneinrichtung 26 und die mobile Leitschwelleneinrichtung 28 miteinander.

Die Übergangsschutzplankenkonstruktion 24 weist zwei übereinander angeordnete Schutzplankenstränge 30 und 32 auf, die an einer Vielzahl von im Untergrund U verankerten Profilpfosten 22 angeordnet sind und sich entlang einer Längsachse des Fahrzeugrückhaltesystems 100 erstrecken. Oberhalb des Schutzplankenstrangs 32 ist ein Kastenprofilstrang 34 vorgesehen. Ebenso wie die Schutzplankenstränge 30 und 32 wird der Kastenprofilstrang 34 von schussweise zusammengesetzten Einzelelementen gebildet. Beim Übergang von der Übergangsschutzplankenkonstruktion 24 auf die stationär installierte Schutzplankeneinrichtung 26 läuft der untere Schutzplankenstrang 30 mit einem Endstück aus. Die stationäre Schutzplankeneinrichtung 26 umfasst somit nur den Schutzplankenstrang 32 und den Kastenprofilstrang 34.

In Fig. 6 ist ein Anschlusselement 36 der mobilen Leitschwelleneinrichtung 28 gezeigt, das zur Verbindung der Übergangsschutzplankenkonstruktion 24 mit der mobilen Leitschwelleneinrichtung 28 dient. Das Anschlusselement 36 der Leitschwellenanordnung 28 ist mit einem Ende mit der Übergangsschutzplankenkonstruktion 24 verbunden. Das Anschlusselement 36 weist einen Längsholm 38 und eine Basis 40 auf, die über Stützpfosten 42 miteinander verbunden sind. Das Anschlusselement 36 umfasst Kopplungsabschnitte 44, über die das Anschlusselement 36 mit weiteren Leitschwellenelementen (nicht gezeigt) der Leitschwellenanordnung 28 koppelbar ist. Das Anschlusselement 36 ist über Befestigungsbolzen 46 mit dem Untergrund U verbunden. An seinem linken Ende ist das Anschlusselement 36 mit einem Schrägholm 48 versehen, der ausgehend von dem Längsholm 38 zur Basis 40 hin abfällt und mit den Schutzplanken 30, 32 verbunden ist.

An dem Fahrzeugrückhaltesystem 100 ist ferner eine Radarreflektoranordnung RF angeordnet. Die Radarreflektoranordnung RF weist mehrere Radarreflektoren 10 auf, von denen aus Gründen der Übersichtlichkeit nur einige mit Bezugszeichen versehen sind. Die Radarreflektoren 10 können in drei Gruppen unterteilt werden. Eine Gruppe G1 der Radarreflektoren 10 ist der Übergangsschutzplankenkonstruktion 26 zugeordnet. Eine weitere Gruppe G2 der Radarreflektoren 10 ist der Schutzplankeneinrichtung 26 und die letzte Gruppe G3 der Radarreflektoren 10 ist der Leitschwellenanordnung 28 zugeordnet. Die einzelnen Gruppen G1, G2, G3 unterscheiden sich durch die Abstände A, B, C der einzelnen Radarreflektoren 10 zueinander. Das vorbestimmte Anordnungsmuster wird durch die Radarreflektoren 10 bzw. die Gruppen G1, G2, G3 gebildet, die in vorbestimmten Abschnitten des Fahrzeugrückhaltesystems 100 verschiedene Abstände A, B, C zueinander aufweisen. Die Radarreflektoren 10 erzeugen aufgrund ihrer unterschiedlichen Abstände A, B, C entlang des Fahrzeugrückhaltesystems 100 ein vorbestimmtes Rückstrahldiagramm. Ein Fahrzeug kann anhand dieses Rückstrahldiagramms mit seinem Radarsensor erkennen, dass ein Fahrzeugrückhaltesystem 100 vorhanden ist, und dass ein Übergang zwischen einer mobilen Leitschwelleneinrichtung 28 auf eine Übergangsschutzplankenkonstruktion 24 und von dieser auf eine Schutzplankeneinrichtung 26 vorliegt. Jedem Fahrzeugrückhaltesystemtyp, d.h. in dem in Figur 6 gezeigten Ausführungsbeispiel der Übergangskonstruktionen 24, der Schutzplankeneinrichtung 26 und der Leitschwelleneinrichtung 28, kann ein bestimmtes Anordnungsmuster der Radarreflektoren 10 zugeordnet sein. In dem Ausführungsbeispiel gemäß Figur 6 werden die vorbestimmten Anordnungsmuster der Übergangskonstruktionen 24, der Schutzplankenkonstruktion 26 und der Leitschwelleneinrichtung 28 durch die unterschiedlichen Abstände A, B, C zwischen den Radarreflektoren 10 angezeigt.

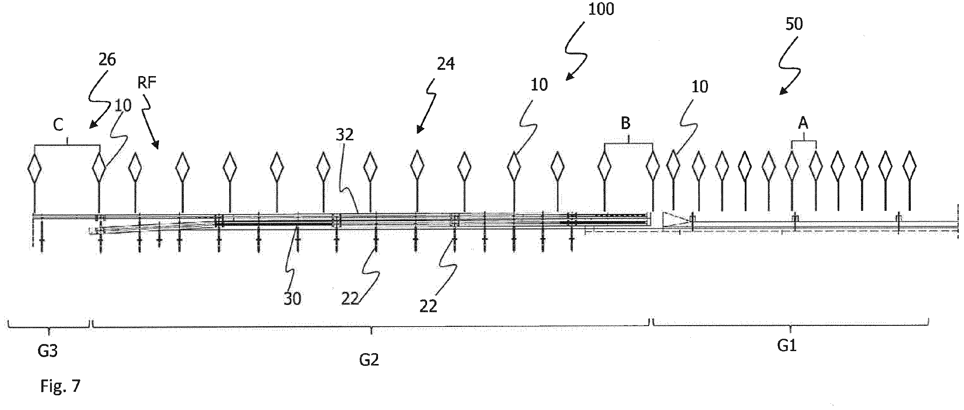

Figur 7 zeigt eine weitere Ausführungsform eines Fahrzeugrückhaltesystems 100, das eine Schutzplankeneinrichtung 26 und einen Wandabschnitt 50 sowie einen Übergangsabschnitt 24 zwischen der Schutzplankenkonstruktion 28 und dem Wandabschnitt 50 aufweist. Der Übergangsabschnitt 24 entspricht im Wesentlichen von seinem Aufbau her der mit Bezug auf Figur 6 beschriebenen Übergangskonstruktion mit dem Unterschied, dass die Schutzplanken 30, 32 mit dem Wandabschnitt 50 verbunden sind. An dem Fahrzeugrückhaltesystem 100 ist wiederum eine Radarreflektoranordnung RF vorgesehen, die der mit Bezug auf Figur 6 beschriebenen Radarreflektoranordnung RF entspricht.

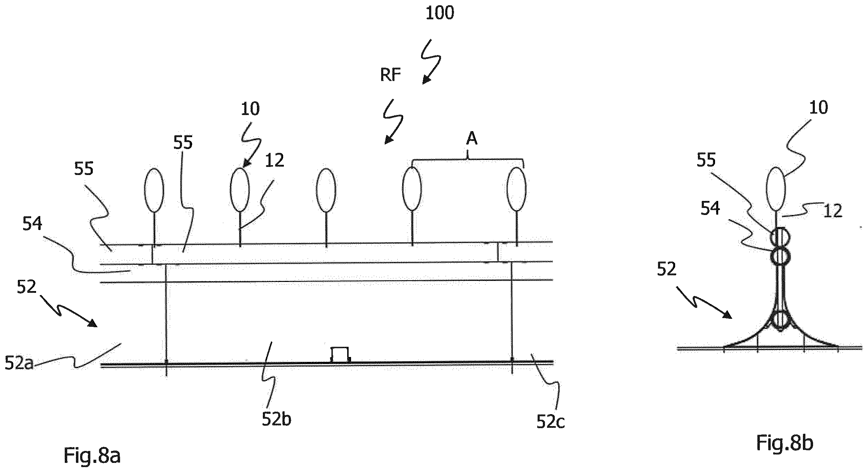

Figuren 8a und 8b zeigen ein temporäres Fahrzeugrückhaltesystem 100 gemäß einem weiteren Ausführungsbeispiel. Das Fahrzeugrückhaltesystem 100 wird von einer Schutzwandanordnung gebildet, die einen Ablenkkörper 52 aufweist. An dem Ablenckörper 52 ist ein Rundrohr 54 vorgesehen, das sich entlang des Ablenkkörpers 52 erstreckt. Oberhalb des Rundrohr 54 ist ein Verbindungsrohr 55 vorgesehen, das ebenfalls einen runden Querschnitt aufweist. Mit den Verbindungsvorsprüngen und 50 können die einzelnen Ablenkkörpersegmente 52a, 52b, 52c miteinander verbunden werden. Dies ist insbesondere an den zueinander versetzten Stoßstellen der Rohre 55 und der Ablenkkörpersegmente 52a, 52b, 52c erkennbar. Das Fahrzeugrückhaltesystem 100 umfasst ferner eine Radarreflektoranordnung RF. Die Radarreflektoren 10 der Radarreflektoranordnung RF können über ihre Halterungseinrichtung 12 an dem Rundrohr 54 befestigt werden und einen vorbestimmten Abstand zueinander aufweisen.

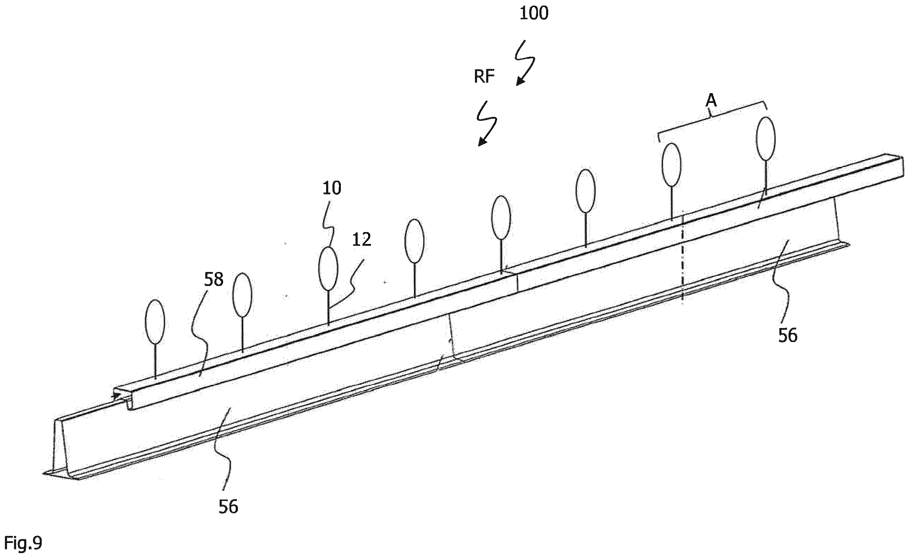

Figur 9 zeigt eine perspektivische Ansicht eines Fahrzeugrückhaltesystems 100 gemäß einem weiteren Ausführungsbeispiel. Das Fahrzeugrückhaltesystem 100 umfasst eine Basisschwelle 56, die sich ausgehend von einem Untergrund U nach oben erstreckt. Die Basisschwelle 56 ist mit einem Leitprofil 58 verbunden. Das Fahrzeugrückhaltesystem 100 weist eine Radarreflektoranordnung RF auf. Die Radarreflektoren 10 können über die Halterungseinrichtung 12 an dem Leitprofil 58 angebracht sein.

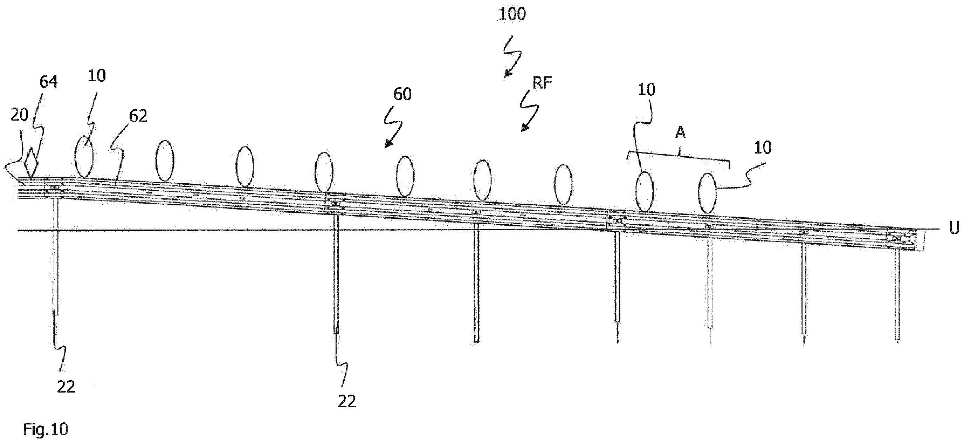

Figur 10 zeigt ein Fahrzeugrückhaltesystem 100 gemäß einem weiteren Ausführungsbeispiel. Das Fahrzeugrückhaltesystem 100 weist eine Anfangs-Endkonstruktion 60, eine Schutzplankenreinrichtung 26 und eine Radarreflektoranordnung RF auf. Die Anfangs-Endkonstruktion 60 wird von einer Schutzplanke bzw. einen Schutzplankenstrang 62 gebildet. Die Schutzplanke 62 erstreckt sich ausgehend von der Schutzplankeneinrichtung 26 mit der Schutzplanke 20 abgewinkelt in Richtung des Untergrunds U. Das freie Ende der Schutzplanke 62 kann sich im Untergrund U befinden oder mit dem Untergrund U verankert sein. Die Radarreflektoranordnung RF weist mehrere Radarreflektoren 10 auf, die einen vorbestimmten Abstand A zueinander aufweisen. Mit der Radarreflektoranordnung RF kann einem Fahrzeug oder einem Fahrerassistenzsystem über seinen Radarsensor eine Anfangs-Endkonstruktion 60 und damit der Anfang oder das Ende des Fahrzeugrückhaltesystems 100 angezeigt werden. Auch eine Anfangs-Endkonstruktion 60 kann ein vorbestimmtes Anordnungsmuster der Radarreflektoren 10 zugeordnet sein. Die Radarreflektoranordnung RF kann aufgrund ihres Anordnungsmusters ein vorbestimmtes Rückstrahldiagramm erzeugen, das einem Fahrzeug eine Anfangs-Endkonstruktion 60 bzw. die Anfang oder das Ende des Fahrzeugrückhaltesystems 100 anzeigen kann.

Zusätzlich kann die Radarreflektoranordnung RF auch Radarreflektoren 64 aufweisen, die an der Schutzplankeneinrichtung 26 angeordnet sind. Die Schutzplanke 20 schließt sich an die Schutzplanke 62 an. Der Typ des Radarreflektors 64 kann sich vom Typ der Radarreflektoren 10 unterscheiden. Auf diese Weise kann ebenfalls ein spezielles Rückstrahldiagramm erzeugt werden, sodass der Übergang von der Anfangs-Endkonstruktion 60 auf die Schutzplankeneinrichtung 26 mit einem Radarsensor erfassbar ist. Es ist jedoch auch denkbar, dass nur die Anfangs-Endkonstruktion 60 mit einer Radarreflektoranordnung RF versehen ist, um dem Fahrzeug oder dem Fahrassistenzsystem den Beginn oder das Ende eines Fahrzeugrückhaltesystems anzuzeigen.

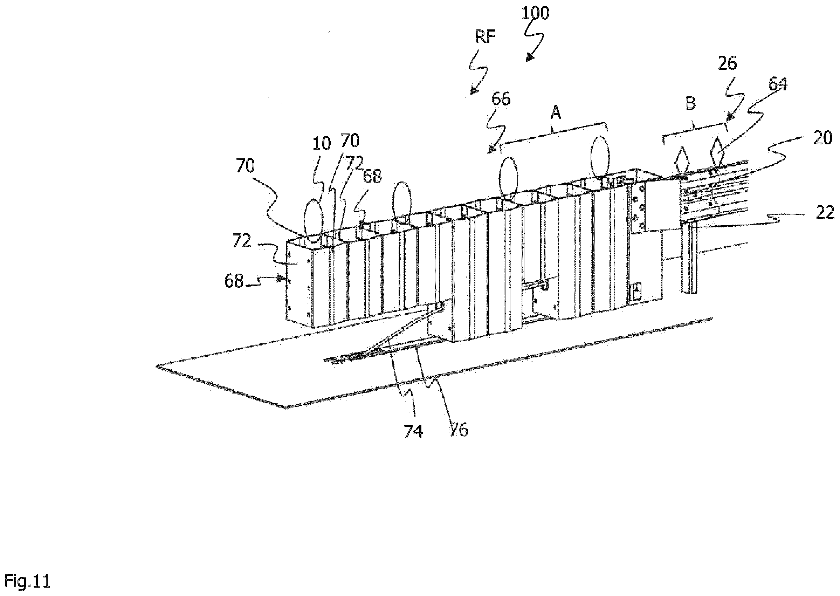

Figur 11 zeigt eine perspektivische Ansicht eines Fahrzeugrückhaltesystems 100 gemäß einem weiteren Ausführungsbeispiel. Das Fahrzeugrückhaltesystem 100 weist eine Anfangs-Endkonstruktion 66 auf. Die Anfangs-Endkonstruktion 66 umfasst mehrere Dämpfungsrohre 68. Jedes Dämpfungsrohr 68 kann ein im Wesentlichen C-förmiges Profil aufweisen. Jedes der Dämpfungsrohre 68 hat zwei Seitenwandabschnitte 70. Zwischen den Seitenwandabschnitten 70 erstreckt sich zumindest ein Wandabschnitt 72. Alternativ können für diese Art von Anfangs-Endkonstruktionen auch Rohre oder Tonnen eingesetzt werden. Die Anfangs-Endkonstruktion 66 weist ferner ein Kabel oder Seil 74 und eine Führungsschiene 76 auf. Durch das Seil 74 und die Führungsschiene 76 kann eine geführte Deformationsbewegung der Dämpfungsrohre 68 erzeugt werden, falls ein Fahrzeug gegen die Anfangs-Endkonstruktion 66 prallen sollte.

Das Fahrzeugrückhaltesystem 100 weist eine Radarreflektoranordnung RF auf. Die die Radarreflektoranordnung RF umfasst die Radarreflektoren 10, die an der Anfangs-Endkonstruktion 66 angeordnet sind. Die Radarreflektoren 10 weisen einen vorbestimmten Abstand A zueinander auf. Die Anfangs-Endkonstruktion 66 ist mit einer Schutzplankeneinrichtung 26 verbunden, die die Schutzplanke bzw. einen Schutzplankenstrang 20 aufweist. Die Radarreflektoranordnung RF weist ferner die Radarreflektoren 64 auf. Die Radarreflektoren 64 sind an der Schutzplanke 20 angebracht und weisen einen vorbestimmten Abstand B zueinander auf. Auf diese Weise kann einem Fahrzeug der Übergang von der Anfangs-Endkonstruktion 66 auf Schutzplankeneinrichtung 26 signalisiert werden.

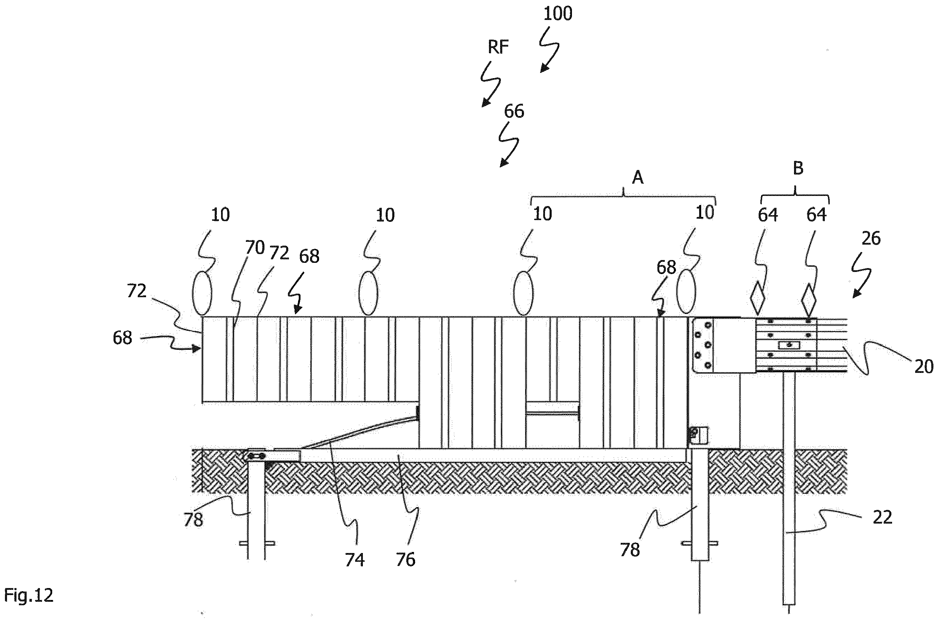

Figur 12 zeigt eine Seitenansicht des Fahrzeugrückhaltesystems 100 gemäß Figur 11. In Figur 11 ist die Anfangs-Endkonstruktion 66 gezeigt, die mit der Schutzplanke 20 verbunden ist. Die Schutzplanke 20 ist über die Pfosten 22 im Untergrund U verankert. Die Führungsschiene 76 der Anfangs-Endkonstruktion 66 ist über die Posten 78 ebenfalls im Untergrund U verankert. Die Dämpfungsrohre 68 werden über das Seil 74 an der Führungsschiene 76 gehalten.

Das von der Anfangs-Endkonstruktion 66 und der Schutzplankeneinrichtung 26 gebildete Fahrzeugrückhaltesystem 100 weist die Radarreflektoranordnung RF auf. An der Anfangs-Endkonstruktion 66 sind die Radarreflektoren 10 angebracht, die einen vorbestimmten Abstand A zueinander aufweisen. Die Radarreflektoren 10 sind an der Oberseite, d. h. an der dem Untergrund U abgewandten Seite der Dämpfungsrohre 68 angebracht. An der Schutzplanke 20 sind die Radarreflektoren 64 angebracht, die sich von den Radarreflektoren 10 unterscheiden. Die Radarreflektoren 64 weisen einen Abstand B zueinander auf. Mit der Radarreflektoranordnung RF kann einem Fahrzeug eine Anfangs-Endkonstruktion 66 angezeigt werden, die das Ende oder den Anfang des Fahrzeugrückhaltesystems 100 markiert. Durch das von den unterschiedlichen Radarreflektoren 10 und 64 gebildete Anordnungsmuster kann der Radarsensor des Fahrzeugs aufgrund des von den Radarreflektoren 10, 64 erzeugten Rückstrahldiagramms den Übergang auf die Schutzplankeneinrichtung 26 und damit auf das eigentliche Fahrzeugrückhaltesystem erfassen. Es ist jedoch auch denkbar, dass die Radarreflektoranordnung RF nur an der Anfangs-Endkonstruktion 66 angebracht ist.

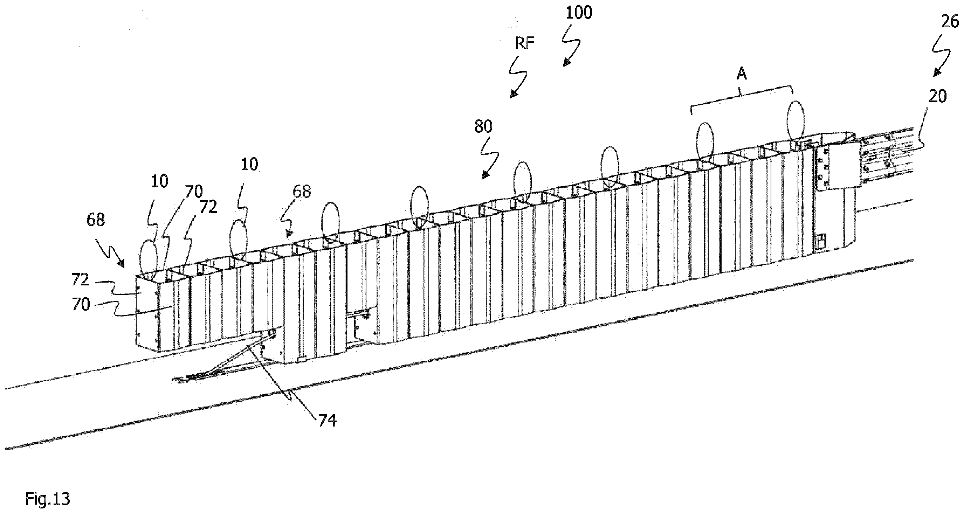

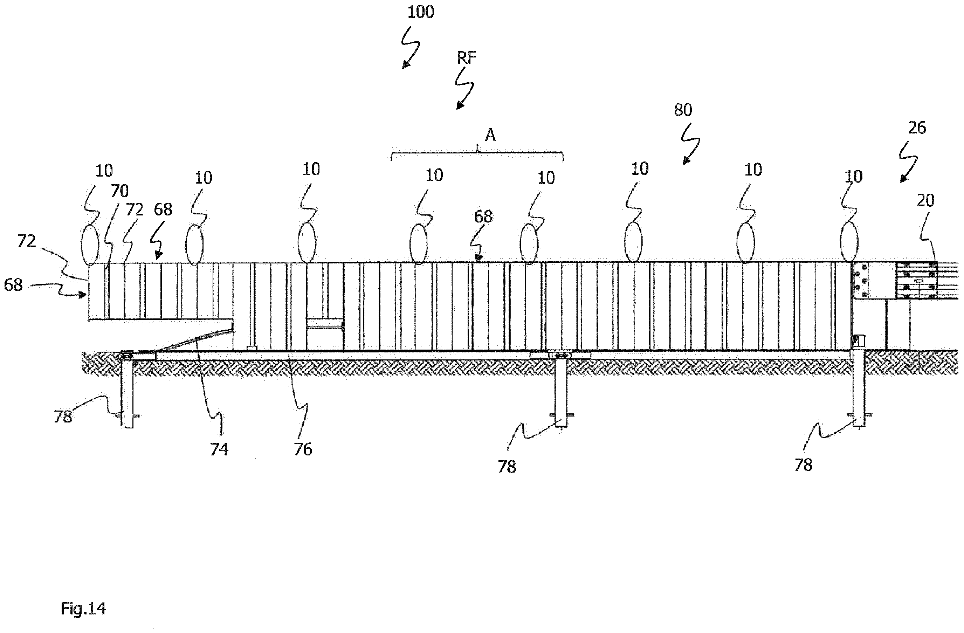

Die Figuren 13 und 14 zeigen ein Fahrzeugrückhaltesystem 100 gemäß einem weiteren Ausführungsbeispiel. Das Fahrzeugrückhaltesystem 100 umfasst eine Anfangs-Endkonstruktion 80, die ähnlich zu der mit Bezug auf die Figuren 11 und 12 beschriebenen Anfangs-Endkonstruktion 80 ausgebildet ist. Die Anfangs-Endkonstruktion 80 gemäß der Figuren 13 und 14 ist verglichen mit der Anfangs-Endkonstruktion 88 deutlich länger ausgebildet und hat damit ein höheres Aufhaltevermögen. Die Anfangs-Endkonstruktion 80 ist mit einer Schutzplankenkonstruktion 26 verbunden, die die Schutzplanke 20 aufweist. An der Anfangs-Endkonstruktion 80 ist eine Radarreflektoranordnung RF angebracht, die Radarreflektoren 10 aufweist. Die Radarreflektoren 10 weisen einen vorbestimmten Abstand A zueinander auf. Gemäß dem in den Figuren 13 und 14 gezeigten Ausführungsbeispiel sind die Radarreflektoren 10 nur an der Anfangs-Endkonstruktion 80 angebracht.

Das Fahrzeugrückhaltesystem 100 gemäß der vorliegenden Erfindung kann verschiedene Grundkonstruktionen aufweisen, wie voranstehend beschrieben wurde. An dem Fahrzeugrückhaltesystem können unabhängig von seiner konstruktiven Ausbildung die Radarreflektoren 10 in einem vorbestimmten Anordnungsmuster angeordnet werden, um ein vorbestimmtes Rückstrahldiagramm zu erzeugen. Über das vorbestimmte Rückstrahldiagramm können einem mit einem Radarsensor versehenen Fahrzeug Informationen über das Fahrzeugrückhaltesystem 100 und/oder über den Straßenverlauf übermittelt werden.

## Patentansprüche

1. Fahrzeugrückhaltesystem (100) zur Absicherung von Verkehrswegen, wobei das Fahrzeugrückhaltesystem (100) dazu ausgebildet ist, sich entlang zumindest eines Abschnitts des wenigstens einen Verkehrswegs zu erstrecken, **dadurch gekennzeichnet, dass** das Fahrzeugrückhaltesystem (100) wenigstens eine Radarreflektoranordnung (RF) mit mehreren Radarreflektoren (10) aufweist, wobei die Radarreflektoren (10) zur Erzeugung eines vorbestimmten Rückstrahldiagramms in wenigstens einem vorbestimmten Anordnungsmuster an dem Fahrzeugrückhaltesystem angeordnet sind.

2. Fahrzeugrückhaltesystem (100) nach Anspruch 1,
wobei das vorbestimmte Anordnungsmuster der Radarreflektoren (10) in wenigstens einem Abschnitt des Fahrzeugrückhaltesystems (100) von Radarreflektoren (10) gebildet wird, die einen vorbestimmten Abstand (A, B, C) zueinander aufweisen.

3. Fahrzeugrückhaltesystem (100) nach Anspruch 2,
das vorbestimmte Anordnungsmuster der Radarreflektoren (10) in wenigstens einem Abschnitt des Fahrzeugrückhaltesystems (100) von Radarreflektoren (10) gebildet wird, die entlang des Fahrzeugrückhaltesystems (100) einen konstanten Abstand (A) zueinander aufweisen.

4. Fahrzeugrückhaltesystem (100) nach Anspruch 2 oder 3,
wobei das vorbestimmte Anordnungsmuster der Radarreflektoren (10) in wenigstens einem Abschnitt des Fahrzeugrückhaltesystems (100) von Radarreflektoren (10) gebildet wird, deren Abstände (A, B, C) zueinander sich entlang des wenigstens einen Fahrzeugrückhaltesystems (100) verändern.

5. Fahrzeugrückhaltesystem (100) nach einem der Ansprüche 1 bis 4,
wobei das Anordnungsmuster der Radarreflektoren (10) an dem Fahrzeugrückhaltesystem (100) eine Kodierung bildet.

6. Fahrzeugrückhaltesystem (100) nach einem der Ansprüche 1 bis 5,
wobei die wenigstens eine Radarreflektoranordnung (RF) Radarreflektoren (10) unterschiedlichen Typs aufweist.

7. Fahrzeugrückhaltesystem (100) nach einem der Ansprüche 1 bis 6,
wobei die Radarreflektoranordnung (RF) wenigstens einen Winkelreflektor (10) und/oder wenigstens einen Röhrenreflektor und/oder wenigstens einen Retroreflektor umfasst.

8. Fahrzeugrückhaltesystem (100) nach einem der Ansprüche 1 bis 7,
wobei wenigstens eine Halterungsvorrichtung (12) vorgesehen ist, mit der der wenigstens eine Radarreflektor (10) an dem Fahrzeugrückhaltesystem (100) angebracht ist.

9. Fahrzeugrückhaltesystem (100) nach einem der Ansprüche 1 bis 8,
wobei die Radarreflektoren (10) an der Oberseite des Fahrzeugrückhaltesystems (100) und/oder an einer Seitenfläche des Fahrzeugrückhaltesystems (100) angeordnet sind.

10. Fahrzeugrückhaltesystem (100) nach einem der Ansprüche 1 bis 9,
wobei jedem Fahrzeugrückhaltesystemtyp ein vorbestimmtes Anordnungsmuster der Radarreflektoren (10) zugeordnet ist.

## Claims

1. A vehicle restraint system (100) for securing traffic routes, the vehicle restraint system (100) being adapted to extend along at least a portion of the at least one traffic route, **characterized in that** the vehicle restraint system (100) comprises at least one radar reflector array (RF) comprising a plurality of radar reflectors (10), the radar reflectors (10) being arranged in at least one predetermined arrangement pattern on the vehicle restraint system for generating a predetermined return beam pattern.

2. Vehicle restraint system (100) according to claim 1,
wherein the predetermined arrangement pattern of the radar reflectors (10) in at least a portion of the vehicle restraint system (100) is formed by radar reflectors (10) having a predetermined spacing (A, B, C) from each other.

3. Vehicle restraint system (100) according to claim 2,
the predetermined arrangement pattern of the radar reflectors (10) in at least one section of the vehicle restraint system (100) is formed by radar reflectors (10) which have a constant spacing (A) from one another along the vehicle restraint system (100).

4. Vehicle restraint system (100) according to claim 2 or 3,
wherein the predetermined arrangement pattern of the radar reflectors (10) in at least one section of the vehicle restraint system (100) is formed by radar reflectors (10) whose distances (A, B, C) from one another vary along the at least one vehicle restraint system (100).

5. Vehicle restraint system (100) according to any one of claims 1 to 4,
wherein the pattern of arrangement of the radar reflectors (10) on the vehicle restraint system (100) forms a coding.

6. Vehicle restraint system (100) according to any one of claims 1 to 5,
wherein the at least one radar reflector array (RF) comprises radar reflectors (10) of different types.

7. Vehicle restraint system (100) according to any one of claims 1 to 6, wherein the radar reflector arrangement (RF) comprises at least one angle reflector (10) and/or at least one tube reflector and/or at least one retroreflector.

8. Vehicle restraint system (100) according to any one of claims 1 to 7, wherein at least one mounting device (12) is provided for mounting the at least one radar reflector (10) to the vehicle restraint system (100).

9. Vehicle restraint system (100) according to any one of claims 1 to 8, wherein the radar reflectors (10) are arranged on the top surface of the vehicle restraint system (100) and/or on a side surface of the vehicle restraint system (100).

10. Vehicle restraint system (100) according to any one of claims 1 to 9, wherein a predetermined arrangement pattern of the radar reflectors (10) is associated with each vehicle restraint system type.

## Revendications

1. Système de retenue de véhicule automobile (100) pour sécuriser des voies de circulation, dans lequel le système de retenue de véhicule (100) est conçu pour s'étendre le long d'au moins un tronçon de ladite voie de circulation, **caractérisé en ce que** le système de retenue de véhicule (100) comprend au moins un agencement de réflecteur radar (RF) ayant plusieurs réflecteurs radars (10), les réflecteurs radars (10) étant disposés pour produire un diagramme de réverbération prédéfini dans au moins un modèle de configuration prédéfini sur le système de retenue de véhicule (100).

2. Système de retenue de véhicule automobile (100) selon la revendication 1, dans lequel le modèle de configuration prédéfini des réflecteurs radars (10) est formé dans au moins une partie du système de retenue de véhicule automobile (100) par les réflecteurs radars (10), qui présentent une distance prédéfinie (A, B, C) entre eux.

3. Système de retenue de véhicule automobile (100) selon la revendication 2, dans lequel le modèle de configuration prédéfini des réflecteurs radars (10) est formé dans au moins une partie du système de retenue de véhicule automobile (100) par les réflecteurs radars (10) qui présentent le long du système de retenue de véhicule automobile (100) une distance constante (A) entre eux.

4. Système de retenue de véhicule automobile (100) selon la revendication 2 ou la revendication 3, dans lequel le modèle de configuration prédéfini des réflecteurs radars (10) est formé dans au moins une partie du système de retenue de véhicule automobile (100) par les réflecteurs radars (10), dont les distances entre eux se modifient le long de l'au moins un système de retenue de véhicule automobile (100).

5. Système de retenue de véhicule automobile (100) selon l'une quelconque des revendications 1 à 4, dans lequel le modèle de configuration des réflecteurs radars (10) forme un codage sur le système de retenue de véhicule automobile (100).

6. Système de retenue de véhicule automobile (100) selon l'une quelconque des revendications 1 à 5, dans lequel l'au moins un agencement de réflecteurs radars (RF) comporte des réflecteurs radars (10) de différents types.

7. Système de retenue de véhicule automobile (100) selon l'une quelconque des revendications 1 à 6, dans lequel l'agencement de réflecteurs radars (RF) comprend au moins un réflecteur en trièdre (10) et/ou au moins un réflecteur tubulaire et/ou au moins un rétroréflecteur.

8. Système de retenue de véhicule automobile (100) selon l'une quelconque des revendications 1 à 7, dans lequel il est prévu au moins un dispositif de retenue (12) qui permet d'installer l'au moins un réflecteur radar (10) sur le système de retenue de véhicule automobile (100).

9. Système de retenue de véhicule automobile (100) selon l'une quelconque des revendications 1 à 8, dans lequel les réflecteurs radars (10) sont disposés sur le côté supérieur du système de retenue de véhicule automobile (100) et/ou sur la face latérale du système de retenue de véhicule automobile (100).

10. Système de retenue de véhicule automobile (100) selon l'une quelconque des revendications 1 à 9, dans lequel chaque type de système de retenue de véhicule automobile est associé à un modèle de configuration prédéfini des réflecteurs radars (10).
